Europäisches Patentamt

European Patent Office

Office européen des brevets

(11) Publication number: **0 425 720 A1**

# EUROPEAN PATENT APPLICATION

(21) Application number: 89120193.1

(22) Date of filing: 31.10.89

(51) Int. Cl.5: **B62M 19/00**

(43) Date of publication of application:
**08.05.91 Bulletin 91/19**

(84) Designated Contracting States:
**AT BE CH DE ES FR GB GR IT LI LU NL SE**

(71) Applicant: **Hsu, Tse-Sheng**
**No. 475-1, Kao-Mei Road**
**Chin Shui Town Taichung County(TW)**

Applicant: **Chang, Ching-Chiang**
**No. 66-4, Lane Hsi-Lin**
**Taichung County(TW)**

Applicant: **Chang, Wen-Chou**
**No. 66, Lane Hsi-Lin**
**Taichung County(TW)**

Applicant: **Chang, Wen-Huan**
**No. 66, Lane Hsi-Lin**
**Taichung County(TW)**

(72) Inventor: **Hsu, Tse-Sheng**
**No. 475-1, Kao-Mei Road**
**Chin Shui Town Taichung County(TW)**
Inventor: **Chang, Ching-Chiang**
**No. 66-4, Lane Hsi-Lin**
**Taichung County(TW)**
Inventor: **Chang, Wen-Chou**
**No. 66, Lane Hsi-Lin**
**Taichung County(TW)**
Inventor: **Chang, Wen-Huan**
**No. 66, Lane Hsi-Lin**
**Taichung County(TW)**

(74) Representative: **Kador & Partner**
**Corneliusstrasse 15**
**W-8000 München 5(DE)**

(54) **Hydraulic drive system for bicycle.**

(57) A hydraulic drive system for bicycle comprises of a drive device set in the bottom bracket (13) of the frame (10) of a bicycle, a driven device (30) fixedly mounted on the freewheel axle of the bicycle (41), and an hydraulic oil circulating assembly connected therebetween. Through hydraulic drive (20), a stepless speed control can be achieved and the bicycle can be efficiently driven to move.

FIG.3

EP 0 425 720 A1

## HYDRAULIC DRIVE SYSTEM FOR BICYCLE

### BACKGROUND OF THE INVENTION:

The present invention is related to a hydraulic drive system and more particularly to the one for driving a bicycle.

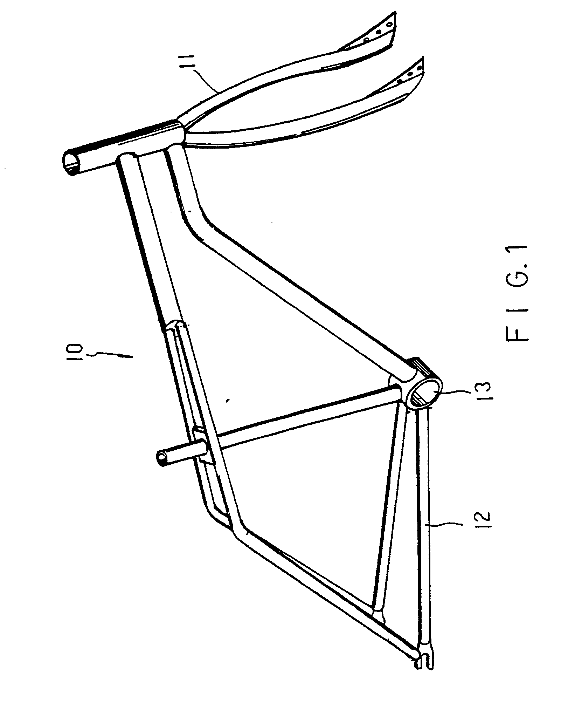

Regular bicycle, as illustrated in Fig. 1, is generally comprised of a frame (10) which includes a front fork (11) at the front for connection thereto of a hub and a front wheel, a chain stays at the back for connection thereto of a freewheel axle and a freewheel, and a bottom bracket (13) at the bottom for connection thereto of a crank and a pair of pedals; and a chain drive system which comprises a chain wheel mounted on the crank at one side to carry the freewheel through a chain. When one is pedaling the pedals of a bicycle, the chain wheel of the bicycle will drive the chain to carry the freewheel to rotate so as to further drive the bicycle to run. Further a caliper brake is commonly used to press on the rim to stop the rotation of the bicycle wheels, and a rear derailleur and a gear set are generally used to achieve speed change control through gear ration change. Drawbacks of the structure of conventional bicycle are outlined hereinafter:

1. With respect to chain drive: It is inconvenient and expensive to maintain, because the tension of the chain is difficult to adjust; the teeth of the chain may be disengaged from the chain wheel to cause accident; the chain and chain wheel must be protected by a chain guard from contamination; and the chain wheel and the chain must be frequently lubricated to smooth the engagement of the teeth therebetween.

2. With respect to caliper brake: The brake shoe assembly of the caliper brake will wear off within a short period of time to affect braking effect and therefore it must be replaced regularly.

3. With respect to speed change gear: In order to change speed, gear ration must be changed. If to increase the shifts of speed, more gears must be used. In consequence, the cost and the total weight of a bicycle will be relatively increased. Further, the positioning of the chain on the speed change gear can only be changed during rotation of the chain wheel. When a bicycle is stopped from top shift, it will be very difficult to pedal the bicycle to run again because the transmission can not be changed from fast shift to the slow shift before the bicycle starts to run again.

It is therefore, the main object of the present invention to provide such a hydraulic drive system for bicycle which eliminates the use of gear and chain drive.

Another object of the present invention is to provide such a hydraulic drive system for bicycle which utilizes hydraulic oil to drive a driven device to carry the freewheel of a bicycle to run.

Still another object of the present invention is to provide such a hydraulic drive system for bicycle wherein the hydraulic circulating assembly is comprised of flexible oil input and output tubes and can be received inside the frame of a bicycle to minimize space consumption and not to destroy the outer appearance of the bicycle frame structure.

Still another object of the present invention is to provide such a hydraulic drive system for bicycle which utilizes a limiting valve to stop the rotation of the driven device so as to achieve a wear-free braking effect.

Still another object of the present invention is to provide such a hydraulic drive system for bicycle which utilizes a speed change control bolt to control the flow of hydraulic oil output to further achieve a stepless speed change control.

A yet further object of the present invention is to provide such a hydraulic drive system for bicycle which can change speed shift of a bicycle before ridding.

### BRIEF DESCRIPTION OF THE DRAWINGS:

Fig. 1 illustrates the structure of the main frame of a regular bicycle;

Fig. 2 is a perspective view of a hydraulic drive system embodying the present invention;

Fig. 3 illustrates the mounting of the present invention in a bicycle;

Fig. 4 is a perspective exploded view of the drive device of the present invention;

Fig. 5 is a perspective exploded view of the driven device of the present invention;

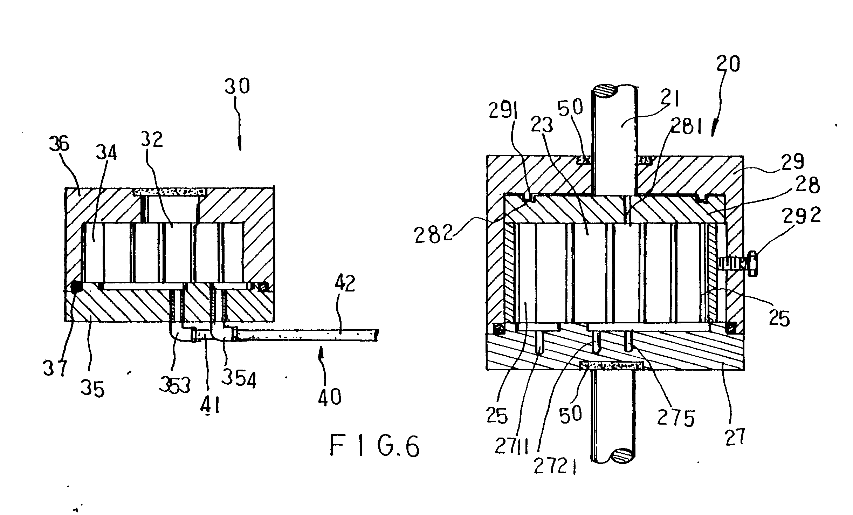

Fig. 6 is a sectional assembly view of the present invention;

Fig. 7 is a schematic view illustrating the operation of the present invention in transmitting hydraulic oil; and

Fig. 8 is a schematic view illustrating the stepless speed changing operation of the present invention.

### DESCRIPTION OF THE DESIGNATED NUMERALS:

(10) ... Frame
(11) ... Front fork
(12) ... Chain stays
(13) ... Bottom bracket

(14) ... Rear wheel axle
(20) ... Drive device
(21) ... Power transmission axle
(22) ... One-way bearing
(23) ... Rotor
(231) ... Vane groove
(24) ... Z-shaped spring
(25) ... Vane
(26) ... Flow regulating bush
(27) ... Oil passage holder
(271) ... Oil input slot
(272) ... Oil output slot
(273)... Oil tube connector
(274) ... Oil tube connector
(275) ... Oil filling hole
(276) ... Projection
(28) ... Rotor pressure plate
(281) ... Oil hole
(282) ... Positioning hole
(29) ... Cover
(291) ... Positioning pin
(292) ... Speed change control bolt
(30) ... Driven device
(31) ... Hollow shaft
(32) ... Rotor
(321) ... Vane groove
(33) ... Z-shaped spring
(34) ... Vane blade
(35) ... Oil passage holder
(351) ... Oil input slot
(352) ... Oil output slot
(353) ... Oil tube connector
(354) ... Oil tube connector
(36) ... Cover
(361) ... Eccentric circle
(37) ... Oil seal
(40) ... Oil circulating tube assembly
(41) ... Oil inlet tube
(42) ... Oil outlet tube
(50) ... Oil seal

## DETAILED DESCRIPTION OF THE PREFERRED EMBODIMENTS:

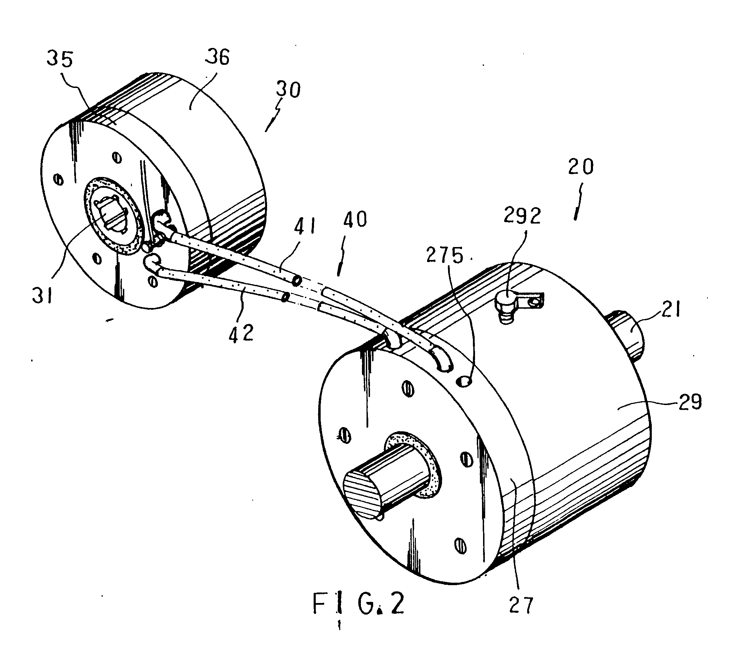

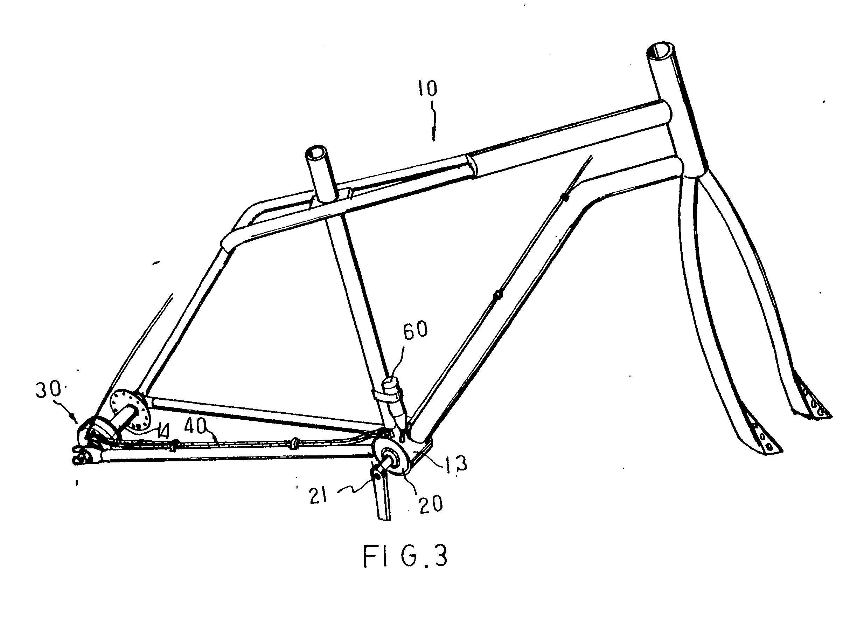

Turning now to Figs. 2 and 3 in detail, therein illustrated is an hydraulic drive system for bicycle embodying the present invention and generally comprised of a drive device (20), a driven device (30) and an oil circulating tube assembly (40).

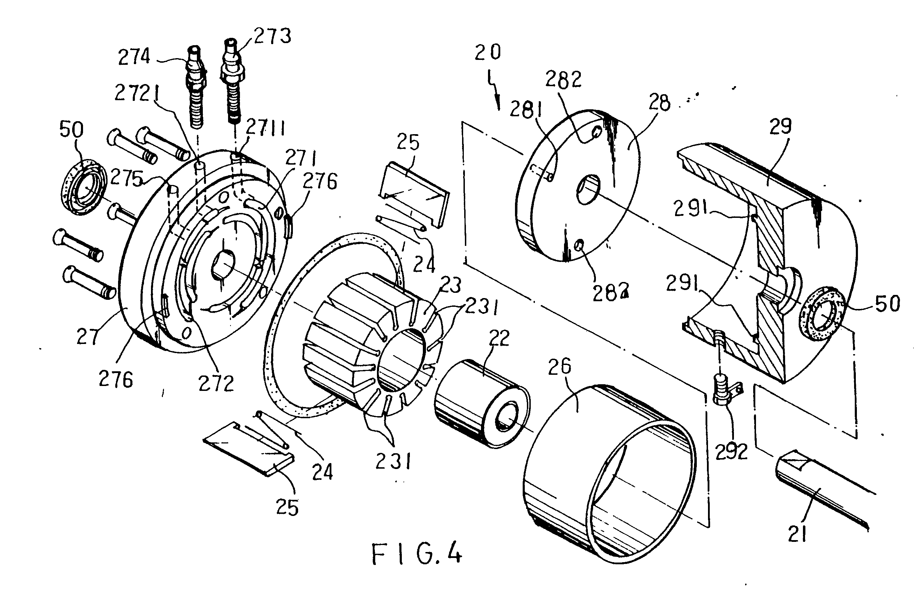

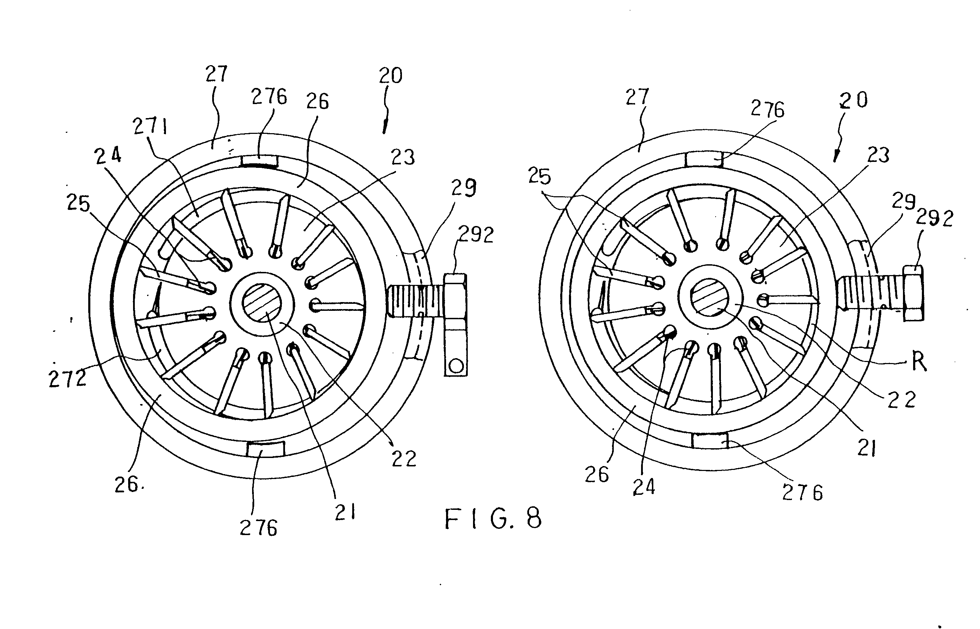

Referring to Fig. 4, the drive device (20) includes a power transmission axle (21) having one end connected to a crank to receive power from the pedal of a bicycle and the other end inserted through an one-way bearing (22). The one-way bearing (22) is seated in the boring bore of a rotor (23) which has a plurality of vane grooves (231) made thereon around its periphery. The vane grooves (231) each has an Z-shaped spring (24) and a vane (25) respectively set therein. A flow regulating bush (26) is mounted on the rotor (23) to cover the vanes (25) and the Z-shaped springs (24) in the vane grooves (231). The rotor (23) is stopped against an oil passage holder (27) at one end. The oil passage holder (27) has axially made thereon intercommunicated oil input slots (271) at a half part, and intercommunicated oil output slots (272) at the other half part. An oil inlet hole (2711) and an oil outlet hole (2721) are respectively made on the oil passage holder (27) communicating with the oil input slots (271) and the oil output slots (272) respectively. A pair of oil tube connectors (273) and (274) are respectively mounted on the oil inlet hole (2711) and the oil outlet hole (2721). An oil filling hole (275) is made on the oil passage holder (27) for filling of hydraulic oil. The rotor (23) is further stopped against a rotor pressure plate (28) at the other end opposite to the oil passage holder (27). The rotor pressure plate (28) comprises an oil hole (281) and two opposite positioning holes (282). The two opposite positioning holes (282) are for insertion therein of the two positioning pins (291) of a cover (29) to protect the rotor pressure plate (28) from rotation. The cover (29) comprises a speed change control bolt (292) which can be screwed therein to force the flow regulating bush (26) to contact with the oil passage holder (27). The oil passage holder (27) further comprises a pair of projections (276) which confine the positioning of the flow regulating bush (26) when the flow regulating bush (26) is forced to connect thereto. Under normal condition, the speed change control bolt (292) pushes the flow regulating bush (26) to one side, and the rotor (23) becomes eccentric against the flow regulating bush (26). Thus, the vanes (25) which are stopped against the flow regulating bush (26) are squeezed inward, and the other opposite vanes are forced by the associated Z-shaped springs (24) to protrude beyond the associated vane grooves (231) and press on the inner wall of the flow regulating bush (26), as illustrated in Fig. 8. The oil passage holder (27) and the cover (29) are further screwed up together with the said component parts retained therein. When the oil passage holder (27) and the cover (29) are connected together, a pair of oil seals (50) are respectively mounted thereon at both ends to protect from oil leakage.

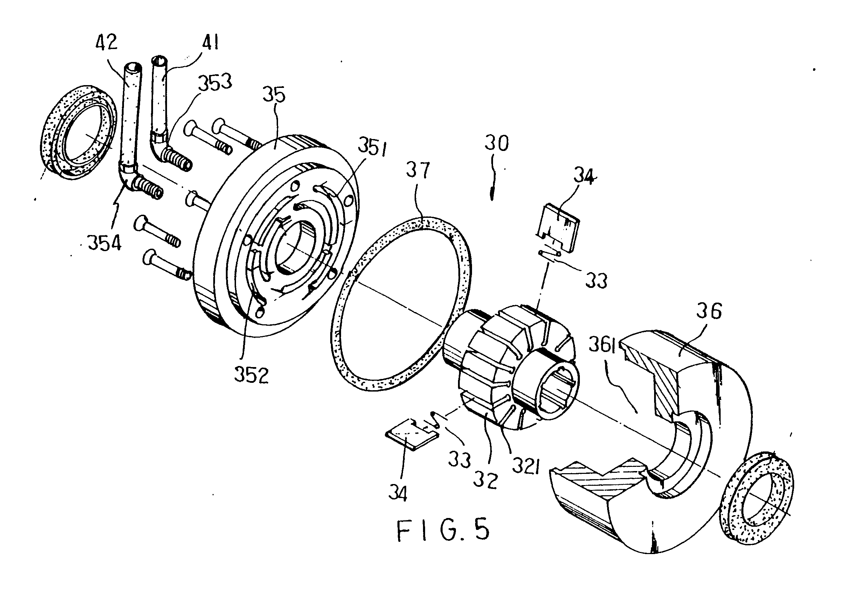

Referring to Fig. 5, the driven device (30) includes a hollow shaft (31) fixedly connected to the rear wheel axle (41) and having mounted thereon a rotor (32) which has a structure similar to the rotor (23) of the drive device (20) but is relatively smaller. Same as the rotor (23), the rotor (32) comprises a plurality of vane grooves (321) having set therein Z-shaped springs (33) and vanes (34) respectively and is connected to an oil passage holder (35) through the hollow shaft 31. The oil passage holder (35), similar to the oil passage holder (27) of the drive device (20), comprises oil input and output slots (351) and (352) respectively communicating to the oil tube connectors (273) and (274) of the oil passage holder (27) of the drive device (20) through oil tube connectors (353) and (354) and oil inlet tube (41) and oil outlet tube (42). The other end of the rotor (32) is connected to a cover (36) which includes therein an eccentric circle (361) against which the vanes (34) of the rotor (32) are alternatively stopped, i.e. some vanes are squeezed by the inner wall of the cover (36) and some other vanes are pushed outward by the associated Z-shaped springs to press on the inner wall of the cover (36). The oil passage holder (35) and the cover (36) are further screwed up together with the said component parts retained therein. When the oil passage holder (35) and the cover (36) are connected together, a pair of oil seals (37) are respectively mounted thereon at both ends to protect from oil leakage.

During assembly in mounting the present invention on a bicycle, the drive device (20) is received in the bottom bracket (13) of the frame (10), the driven device (30) is fixedly connected to the rear wheel axle (14) and the oil circulating tube assembly (40) is connected between the drive device (20) and the driven device (30) to form a hydraulic circulation system. According to the present invention, the oil circulating tube assembly (40) may either concealed in the tubes of the bicycle frame or externally attached thereto.

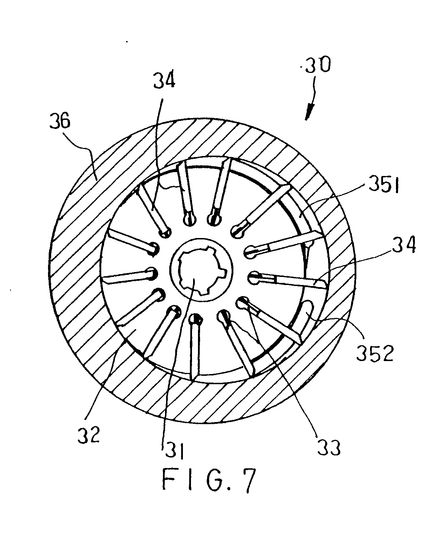

Referring to the operation of the drive device (20) as illustrated in Fig. 8-A, when one pedals the bicycle to drive the power transmission axle (21) to revolve, the rotor (23) and the vanes (25) are simultaneously carried to revolve, and the speed change control bolt (292) pushes the flow regulating bush (26) to touch the outer surface of the rotor (23). Thus, the rotor (23) reaches its maximum eccentricity relative to the flow regulating bush (26). The vanes (25) in the part of the rotor (23) not in touch with the inner wall of the flow regulating bush (26) are pushed by the associated Z-shaped springs (24) to contact the flow regulating bush (26). When the rotor (23) is revolving clockwise, the vanes (25) compress the hydraulic oil from the oil input slots (272) through the oil output slots (272) and the oil inlet tube (41), into the oil input slots (351) and the inner portion of the cover (36) of the driven device (30). Therefore, the flowing hydraulic oil drives the vanes (34) and the rotor (32) of the driven device (30) to rotate (as shown in Fig. 7). Similar to the drive device, the rotor (32) of the driven device (30) is eccentrically disposed in the cover (36), the hydraulic oil from the oil input slots (351) pushes the vanes (34) to rotate, and the vanes (34) further compress toward the oil output slots (352). Simply speaking, the hydraulic oil is pushed to flow through the oil outlet tube (42) back to the drive device (20). Through the circulation of hydraulic oil between the drive device (20) and the driven device (30), the rear wheel axle of the bicycle is continuously drive to revolve to further carry the bicycle to move. Because the one-way bearing (22) is set in the drive device (20), when one stops pedaling, the driven device (30) follows the rear wheel to rotate continuously and to compress hydraulic oil to the drive device (20) to force the rotor (23) to rotate.

The stepless speed control of the present invention is achieved through hydraulic oil output flow control. The speed change control bolt (292) may be connected to a control lever through a cable to control the strength of pressure applied onto the flow regulating bush (26). As illustrated in Fig. 8-A, the inner wall of the flow control bush (26) touches the outer wall of the rotor (23) to result in a maximum eccentricity. Therefore, when the vanes (35) are carried to rotate, the hydraulic oil filled therein is completely pushed outward, i.e. maximum amount of hydraulic oil is pushed to the driven device (30) to perform the so-called top speed shift. If the speed change control bolt (292) is slightly screwed out from the cover (29), as illustrated in Fig. 8-B, the rotor (23) is disposed at a slightly eccentric position inside the flow regulating bush (26), but the rotor (23) and the flow regulating bush (26) are not in contact with each other. Under this condition, some hydraulic oil will be forced to flow through the oil output slots (272) to the driven device (30), when the vanes (25) are carried to push the hydraulic oil, and some will be forced to flow back through the gap (R) between the rotor (23) and the flow regulating bush (26). Because the reverse flow of the hydraulic oil is circulating inside the flow regulating bush (26) and not delivered outward, the total output of hydraulic oil is then relatively reduced. In consequence, the amount of the hydraulic oil which pushed the vanes (34) of the driven device (30) is relatively reduced, and the speed of the bicycle is reduced proportionally. Therefore, through the change of eccentricity of the flow regulating bush (26) against the cover (29), the amount of hydraulic oil output is controlled to achieve stepless speed change. Because there is no any limitation on the timing in changing the position of the speed change control bolt (292) in the cover (29), speed shift can be made in advance before ridding, so as to make start easy.

Further, a limiting valve can be set in the oil tube connector (354) of the driven device (30) to interrupt the circulation of internal hydraulic oil to further stop the rotation of the rotor (32), i.e. to prohibit the hollow shaft (31) from carrying the freewheel of the bicycle. Thus, the bicycle can be stopped.

Referring to Fig. 3, an hydraulic oil reservoir (60) is mounted on the frame (10) to fill hydraulic oil through the oil filling hole (275) into the present invention.

As foregoing statement, the present invention is to provide such a hydraulic drive system for bicycle which eliminates the use of gear and chain drive, achieves stepless speed change control and wear-free braking effect efficiently.

**Claims**

1. A hydraulic drive system for bicycle, including:
a drive device set in the bottom bracket of a bicycle and comprising a power transmission axle having one end connected to the crank of the bicycle to receive power from the pedal and the other end inserted through an one-way bearing received in a drive rotor, said drive rotor comprising a plurality of vane grooves made thereon, an Z-shaped spring and a vane respectively set in each of the vane grooves of said drive rotor, a flow regulating bush mounted on said drive rotor, a first oil passage holder connected to said drive rotor at one end, said oil passage holder comprising intercommunicated oil input slots and oil output slots, a drive rotor pressure plate connected to said drive rotor at the other end opposite, a cover fixedly screwed up with said first oil passage holder to receive said drive rotor and said drive rotor pressure plate therein, and a speed change control bolt mounted on said cover pressing on said flow regulating bush;
a driven device comprising a hollow shaft fixedly connected to the rear wheel axle of the bicycle and having mounted thereon a driven rotor, said driven rotor being relatively smaller than said drive rotor and comprising a plurality of vane grooves, the vane grooves of said drive rotor each having set therein a Z-shaped spring and a vane, a second oil passage holder connected to said driven rotor at one end and comprising oil input and output slots, a cover having internally an eccentric circle for receiving said driven rotor and being fixedly connected with said second oil passage holder by screw bolts; and
an oil circulating tube assembly comprising an input tube and an output tube respectively connected to the oil input slots and oil output slots of the oil passage holders of said drive and driven devices.

2. The hydraulic drive system for bicycle as claimed in claim 1, wherein said speed change control bolt is connected to a control lever through a cable to control the strength of pressure applied onto said flow regulating bush of said drive device to further achieve stepless speed control.

3. The hydraulic drive system for bicycle as claimed in claim 1, wherein a limiting valve is set in the oil output tube of said driven device to interrupt the circulation of internal hydraulic oil to further stop the bicycle.

FIG.1

EP 0 425 720 A1

FIG.2

EP 0 425 720 A1

FIG.3

EP 0 425 720 A1

FIG.4

EP 0 425 720 A1

F I G. 5

F I G.6

FIG.7

F I G. 8

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4546990 (HARRIGER)<br>* column 3, line 40 - column 9, line 56; figures 1-7 * | 1, 2 | B62M19/00 |
| A | FR-A-939917 (LEMAIRE)<br>* page 1,2; figures 1-6 * | 1, 2, 3 | |
| A | US-A-4688815 (SMITH)<br>* column 4, line 59 - column 8, line 62; figures 1-6 * | 1 | |
| A | DE-A-3035630 (WILLIG)<br>* pages 4 - 7; figures * | 1 | |

TECHNICAL FIELDS
SEARCHED (Int. Cl.5)

B62M

The present search report has been drawn up for all claims

| Place of search | Date of completion of the search | Examiner |
|---|---|---|
| THE HAGUE | 05 JULY 1990 | VANNESTE M.A.R. |